(19) Europäisches Patentamt
European Patent Office
Office européen des brevets

(11) **EP 4 787 600 A1**

(12) **EUROPEAN PATENT APPLICATION**
published in accordance with Art. 153(4) EPC

(43) Date of publication:
**05.08.2026 Bulletin 2026/32**

(21) Application number: **24872429.6**

(22) Date of filing: **26.09.2024**

(51) International Patent Classification (IPC):
H01M 50/489 (2021.01)     H01M 4/13 (2010.01)
H01M 4/62 (2006.01)       H01M 4/66 (2006.01)
H01M 10/052 (2010.01)     H01M 10/0569 (2010.01)
H01M 10/0587 (2010.01)    H01M 50/426 (2021.01)
H01M 50/443 (2021.01)     H01M 50/446 (2021.01)
H01M 50/449 (2021.01)     H01M 50/46 (2021.01)
H01M 50/491 (2021.01)

(52) Cooperative Patent Classification (CPC):
H01M 4/13; H01M 4/62; H01M 4/66; H01M 10/052;
H01M 10/0569; H01M 10/0587; H01M 50/426;
H01M 50/443; H01M 50/446; H01M 50/449;
H01M 50/46; H01M 50/489; H01M 50/491;
Y02E 60/10; Y02P 70/50

(86) International application number:
**PCT/JP2024/034501**

(87) International publication number:
**WO 2025/070645 (03.04.2025 Gazette 2025/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **29.09.2023 JP 2023170676**

(71) Applicant: **Panasonic Intellectual Property
Management Co., Ltd.
Kadoma-shi, Osaka 571-0057 (JP)**

(72) Inventors:
• UCHIYAMA, Yohei
  kadoma-shi, Osaka 571-0057 (JP)
• KANO, Akira
  kadoma-shi, Osaka 571-0057 (JP)
• MIYAMAE, Ryohei
  kadoma-shi, Osaka 571-0057 (JP)

(74) Representative: **Novagraaf International SA
Chemin de l'Echo 3
1213 Onex, Geneva (CH)**

(54) **NON-AQUEOUS ELECTROLYTE SECONDARY BATTERY**

(57) A nonaqueous electrolyte secondary battery disclosed includes: an electrode group in which a positive electrode, a negative electrode, and a separator (13) are wound such that the separator (13) is disposed between the positive electrode and the negative electrode; and a nonaqueous electrolyte. The separator (13) includes a substrate layer (13a) having a first main surface (13a1) on the negative electrode side and a second main surface (13a2) on the positive electrode side, and an adhesive layer (13b) formed on the second main surface (13a2) of the substrate layer (13a). At least a part of the adhesive layer (13b) is bonded to the positive electrode. An average value Tn ($\mu$m) of an increase in thickness of one side of the negative electrode due to charging to a state of charge of 90% and an average thickness Ts ($\mu$m) of the separator (13) satisfy a relationship $1.2 < Ts/Tn$.

**FIG. 3**

EP 4 787 600 A1

**Description**

[Technical Field]

The present disclosure relates to a nonaqueous electrolyte secondary battery.

[Background Art]

Nonaqueous electrolyte secondary batteries are used in a variety of applications as high-capacity secondary batteries. Various proposals have been made so far with respect to nonaqueous electrolyte secondary batteries.
Claim 1 of PTL 1 (WO 2019/181286) discloses a "cylindrical nonaqueous electrolyte secondary battery comprising: a wound electrode assembly including a positive electrode having a positive electrode core and positive electrode mixture layers disposed on both faces of the positive electrode core, a negative electrode having a negative electrode core and negative electrode mixture layers disposed on both faces of the negative electrode core, and a separator interposed between the positive electrode and the negative electrode; and a nonaqueous electrolyte, wherein the separator is bonded to the positive electrode over a region from an end of the positive electrode mixture layer on a coiling start side to a length corresponding to at least one loop in a winding direction".

[Citation List]

[Patent Literature]

PTL 1: WO 2019/181286

[Summary of Invention]

[Technical Problem]

Nonaqueous electrolyte secondary batteries have problems in terms of deterioration of the surface of the positive electrode and an oxidative decomposition reaction of the nonaqueous electrolyte on the positive electrode. Furthermore, nonaqueous electrolyte secondary batteries have a problem in that the electrode group significantly expands during charging. These problems cause deterioration in charge-discharge cycle characteristics. At present, there is demand for improvement in the charge-discharge cycle characteristics of nonaqueous electrolyte secondary batteries. One object of the present disclosure is to provide a nonaqueous electrolyte secondary battery that has good charge-discharge cycle characteristics.

[Solution to Problem]

An aspect of the present disclosure is a nonaqueous electrolyte secondary battery including:

an electrode group in which a positive electrode, a negative electrode, and a separator are wound such that the separator is disposed between the positive electrode and the negative electrode; and
a nonaqueous electrolyte,
wherein the separator includes a substrate layer having a first main surface on the negative electrode side and a second main surface on the positive electrode side, and an adhesive layer formed on the second main surface of the substrate layer,
at least a part of the adhesive layer is bonded to the positive electrode, and
an average value Tn ($\mu$m) of an increase in thickness of one side of the negative electrode due to charging to a state of charge of 90% and an average thickness Ts ($\mu$m) of the separator satisfy a relationship $1.2 < Ts/Tn$.

[Advantageous Effects of Invention]

According to the present disclosure, a nonaqueous electrolyte secondary battery having good charge-discharge cycle characteristics can be obtained.
While novel features of the invention are set forth in the appended claims, both configurations and content of the invention as well as other objects and features of the invention will be more fully understood from the following detailed description referring to the drawings.

[Brief Description of Drawings]

FIG. 1 is a schematic diagram for describing a method for measuring the thickness of a negative electrode.
FIG. 2 is a cross-sectional view schematically showing an example of a nonaqueous electrolyte secondary battery according to the present disclosure.
FIG. 3 is a cross-sectional view schematically showing an example of a separator.

[Description of Embodiments]

Hereinafter, embodiments according to the present disclosure will be described with reference to examples, but the present disclosure is not limited to the examples described below. In the following description, specific numerical values and materials may be exemplified, but other numerical values and materials may also be applied as long as effects of the present disclosure can be obtained. In this specification, the wording "numerical value A to numerical value B" refers to a range including the numerical values A and B, and can be read as "at least the numerical value A and not more than the numerical value B". In the following description, when the lower and upper limits of numerical values relating to specific physical properties or conditions are exemplified, any of the exemplified lower limits and any of the exemplified upper limits may be combined suitably as long as the lower limit is not equal to or more than the upper limit. When examples of constituent elements and methods are recited in the following description, only one of the recited examples may be used, or more than one of the recited examples may be used in combination, unless otherwise noted.

(Nonaqueous Electrolyte Secondary Battery)

A nonaqueous electrolyte secondary battery according to the present embodiment may be hereinafter referred to as a "nonaqueous electrolyte secondary battery (B)" or a "secondary battery (B)". The secondary battery (B) includes an electrode group in which a positive electrode, a negative electrode, and a separator are wound such that the separator is disposed between the positive electrode and the negative electrode, and a nonaqueous electrolyte. The separator includes a substrate layer having a first main surface on the negative electrode side and a second main surface on the positive electrode side, and an adhesive layer formed on the second main surface of the substrate layer. At least a part of the adhesive layer is bonded to the positive electrode. An average value Tn ($\mu$m) of an increase in thickness of one side of the negative electrode due to charging to a state of charge (SOC) of 90% and an average thickness Ts ($\mu$m) of the separator satisfy a relationship $1.2 < Ts/Tn$.

The nonaqueous electrolyte secondary battery may be a lithium secondary battery or a lithium-ion secondary battery. In lithium secondary batteries, lithium metal is deposited on the negative electrode during charging and dissolves in a nonaqueous electrolyte during discharging. In lithium-ion secondary batteries, a negative electrode active material capable of reversibly absorbing and releasing lithium ions is used.

In lithium secondary batteries, for example, 70% or more of the rated capacity is produced by the deposition and dissolution of lithium metal. The migration of electrons in the negative electrode during charging and discharging occurs mainly due to the deposition of lithium metal on the negative electrode and the dissolution of the lithium metal from the negative electrode. Specifically, 70% to 100% (e.g., 80% to 100%, or 90% to 100%) of the migration of electrons (from another point of view, a current) in the negative electrode during charging and discharging occurs due to the deposition and dissolution of lithium metal. In other words, the negative electrode of a lithium secondary battery according to the present disclosure differs from a negative electrode in which migration of electrons during charging and discharging occurs mainly due to lithium ions being absorbed and released by a negative electrode active material (graphite or the like). For example, the negative electrode of a lithium secondary battery according to the present disclosure need not contain a negative electrode active material (graphite or the like) that absorbs and releases lithium ions.

In the nonaqueous electrolyte secondary battery, the negative electrode expands during charging. Conventional nonaqueous electrolyte secondary batteries have a problem in that the electrode group expands significantly due to the expansion of the negative electrode during charging. In particular, in lithium secondary batteries, the amount of expansion of the negative electrode during charging is large, so that the amount of expansion of the electrode group is also large. If the amount of expansion of the electrode group (in particular, the amount of expansion in the radial direction of the electrode group) is large, circulation performance of the nonaqueous electrolyte tends to decrease. This results in deterioration of charge-discharge cycle characteristics (hereinafter may be simply referred to as "cyclic characteristics") of the nonaqueous electrolyte secondary battery. Furthermore, in the conventional nonaqueous electrolyte secondary batteries, the surface of the positive electrode tends to deteriorate and an oxidative decomposition reaction of the nonaqueous electrolyte tends to occur on the positive electrode. These also lead to deterioration of the cycle characteristics.

As a result of studies, the inventors of the present application newly found that the cycle characteristics can be significantly improved by bonding the separator having a predetermined thickness to the positive electrode using the adhesive layer. The present disclosure is based on this new finding. By bonding the positive electrode and the separator with the adhesive layer, it is possible to suppress direct contact between the surface of the positive electrode and the nonaqueous electrolyte. As a result, it is possible to suppress deterioration of the surface of the positive electrode and the oxidative decomposition reaction of the nonaqueous electrolyte. Moreover, when the relationship 1.2<Ts/Tn is satisfied, the expansion of the electrode group during charging can be suppressed. It is thought that the significant improvement of the cycle characteristics is not due to a simple addition of these two effects, but is due to a synergistic effect of bonding the positive electrode and the separator with the adhesive layer and satisfying the relationship 1.2<Ts/Tn.

(Separator)

As described above, the separator includes the substrate layer and the adhesive layer and at least a part of the adhesive layer is bonded to the positive electrode. There is no particular limitation on the method for bonding the adhesive layer of the separator to the positive electrode. For example, a flat hot pressing method, a hot roll pressing method, or the like may be used.

The substrate layer is not particularly limited. Separators for use in known nonaqueous electrolyte secondary batteries may be used as the substrate layer. A porous sheet having ion permeability and insulating properties can be used as the substrate layer. Examples of the porous sheet include a microporous film, woven cloth, non-woven cloth, and the like. The material of the substrate layer is not particularly limited, and a polymer material may be used. Examples of the polymer material include an olefin resin, a polyamide resin, cellulose, and the like. Examples of the olefin resin include polyethylene, polypropylene, a copolymer of ethylene and propylene, and the like. The substrate layer may contain additives (e.g., an inorganic filler), if necessary. The substrate layer may be constituted of multiple layers having different forms and/or compositions.

The adhesive layer is formed of a material that can be bonded to the positive electrode. The material of the adhesive layer needs to be stable in the secondary battery (B). The adhesive layer may contain a vinylidene fluoride-based polymer synthesized by polymerizing monomers including vinylidene fluoride. The vinylidene fluoride-based polymer is preferable because of its high adhesiveness to the positive electrode and high stability in the secondary battery (B). The content of the vinylidene fluoride-based polymer in the adhesive layer may be 3% by mass or more, or 50% by mass or more, and may be 100% by mass or less, or 80% by mass or less

The vinylidene fluoride-based polymer includes a constituent unit derived from vinylidene fluoride. The proportion of a VDF unit (the constituent unit derived from vinylidene fluoride) in all constituent units of the vinylidene fluoride-based polymer is not less than 50 mol% and not more than 100 mol%. This proportion may be 75 mol% or more, or 90 mol% or more, and may be 99.5 mol% or less, or 95 mol% or less. Examples of monomers copolymerized with vinylidene fluoride include tetrafluoroethylene, hexafluoropropylene, and the like.

The vinylidene fluoride-based polymer may be polyvinylidene fluoride. Alternatively, the vinylidene fluoride-based polymer may be a copolymer synthesized by polymerizing monomers including vinylidene fluoride and hexafluoropropylene. That is to say, the adhesive layer may contain a copolymer synthesized by polymerizing monomers including vinylidene fluoride and hexafluoropropylene. Since hexafluoropropylene has a bulkier molecular structure than vinylidene fluoride, a copolymer synthesized by polymerizing monomers including vinylidene fluoride and hexafluoropropylene has a lower density than a vinylidene fluoride-based polymer. If monomers including hexafluoropropylene are used, crystallization of the polymer can be suppressed and a flexible adhesive layer can be obtained. Moreover, the retention of the nonaqueous electrolyte in the adhesive layer is improved, and lithium ion conductivity is improved. As a result, the resistance of the battery is reduced and the cyclic characteristics can be further improved.

The vinylidene fluoride-based polymer may be a copolymer of vinylidene fluoride and hexafluoropropylene (HFP). The proportion of an HFP unit (a constituent unit derived from hexafluoropropylene) in all constituent units of the vinylidene fluoride-based polymer may be in the range of 0 to 50 mol% (e.g., 0.5 to 25 mol% or 2 to 10 mol%).

The adhesive layer may contain inorganic particles. The strength and durability of the adhesive layer are improved if the adhesive layer contains inorganic particles.

Inorganic particles having insulating properties can be preferably used as the inorganic particles, but conductive inorganic particles may also be used. It is possible to use inorganic particles having insulating properties such as particles of metal oxides, metal hydroxides, metal nitrides, metal carbides, and metal sulfides. Examples of the material of the inorganic particles include aluminum oxide, magnesium oxide, titanium oxide, zirconium oxide, silicon oxide, zinc oxide, magnesium hydroxide, silicon nitride, aluminum nitride, titanium nitride, silicon carbide, aluminum hydroxide, lithium phosphate, lithium fluoride, carbon black (acetylene black or the like), amorphous silica, crystalline silica, etc. It is also possible to use particles of a solid electrolyte such as LLZO (lithium lanthanum zirconium oxide) or LATP (lithium aluminum titanium phosphate).

The average primary particle size of the inorganic particles may be 0.1 $\mu$m or more, or 1.0 $\mu$m or more, and may be 5.0 $\mu$m or less, or 3.0 $\mu$m or less. The average primary particle size is a median diameter ($D_{50}$) at which a cumulative volume reaches 50% in a volume-based particle size distribution. The median diameter ($D_{50}$) can be measured using a laser diffraction/scattering particle size distribution measuring device.

The content of the inorganic particles in the adhesive layer may be 10% by mass or more, or 20% by mass or more, and may be 99% by mass or less, or 90% by mass or less.

The adhesive layer may be porous. The use of a porous adhesive layer increases the area of contact between the adhesive layer and the nonaqueous electrolyte, thereby further improving the retention of the nonaqueous electrolyte in the adhesive layer and improving lithium ion conductivity. As a result, the resistance of the battery is reduced and good cycle characteristics can be obtained.

The thickness of the adhesive layer may be 0.1 $\mu$m or more, or 0.3 $\mu$m or more, and may be 5 $\mu$m or less, or 2 $\mu$m or less. Note that adhesive layers may be formed on both surfaces of the substrate layer. That is to say, the adhesive layers may be formed on both the first main surface and the second main surface. At least a part of a second adhesive layer formed on the first main surface may be bonded to the negative electrode. Alternatively, a configuration is also possible in which the second adhesive layer formed on the first main surface is not bonded to the negative electrode. By bonding the second adhesive layer to the negative electrode, dendritic deposition of lithium metal during charging can be suppressed. As a result, the expansion of the electrode group during charging can be particularly suppressed.

The average thickness Ts ($\mu$m) of the separator is determined by calculating an arithmetic mean of thicknesses measured at 15 positions. The thickness of the separator can be measured using a method in accordance with JIS (Japanese Industrial Standard) K6250. Specifically, the thickness can be measured using a specimen thickness measuring device (SDA-12 type) manufactured by Kobunshi Keiki Co., Ltd., in accordance with JIS K6250. The measurement is performed under a pressure of 22 kPa, using a stylus with a diameter of 5 mm. The thickness is measured at 15 intersections of five lines that divide the separator into six equal parts in the longitudinal direction and three lines that divide the separator into four equal parts in the width direction. The arithmetic mean of the 15 measured values of thickness is taken to be the average thickness Ts.

As described above, the ratio Ts/Tn of the average thickness Ts ($\mu$m) of the separator to the average value Tn ($\mu$m) of an increase in thickness of one side of the negative electrode due to charging is more than 1.2 (e.g., more than 1.20). The ratio Ts/Tn may be 1.25 or more, 1.30 or more, or 1.50 or more, and may be 5.0 or less, 3.5 or less, or 2.0 or less. If the ratio Ts/Tn is more than 1.2, the expansion of the electrode group during charging can be suppressed. If the ratio Ts/Tn is 3.0 or less, it is possible to suppress a decrease in the volumetric capacity density.

The average value Tn ($\mu$m) can be measured using the following method. First, two batteries manufactured under the same conditions are prepared. One of the batteries is discharged (SOC=0%), and the other battery is charged (SOC=90%). It should be noted that the state of charge (SOC) of 90% is a state in which the battery has been charged with an amount of electricity equal to 90% of the rated capacity. The state of charge (SOC) of 0% is a state in which an amount of electricity equal to 100% of the rated capacity of the battery has been discharged from the fully charged battery. In this specification, the rated capacity of a battery means the one-hour rate capacity.

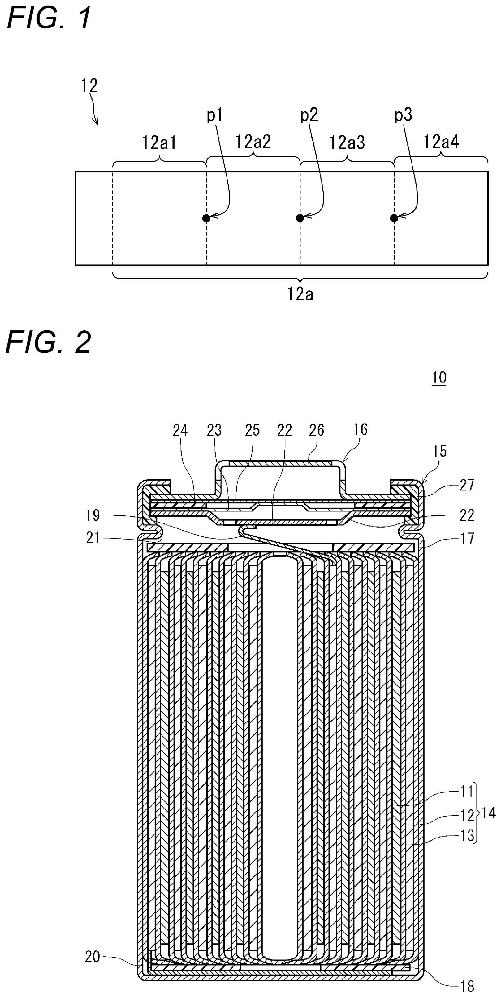

Next, the negative electrode is taken out from each of the discharged battery and the charged battery, and a thickness T(0) ($\mu$m) of the negative electrode in the discharged state and a thickness T(90) ($\mu$m) of the negative electrode in the charged state (SOC=90%) are measured at three points on the negative electrode. Specifically, first, as shown in FIG. 1, a part 12a of the negative electrode 12 facing the positive electrode with the separator sandwiched therebetween is equally divided into four regions 12a1, 12a2, 12a3, and 12a4 in the longitudinal direction of the negative electrode 12. In the part 12a, the negative electrode expands during charging. Then, widthwise center positions at the three boundaries between the four regions 12a1 to 12a4 are defined as positions p1, p2, and p3. The thickness T(0) and the thickness T(90) are measured at the positions p1, p2, and p3. Both surfaces of the negative electrode face the positive electrode at the positions p1, p2, and p3 with the separator sandwiched therebetween. The average value Tn of an increase in the thickness due to charging on one side of the negative electrode is calculated using the following equation.

Tn = {(sum of the thickness T(90) at the three positions) - (sum of the thickness T(0) at the three positions)}/6

The porosity of the substrate layer may be 40% or more, or 50% or more, and may be 90% or less, or 80% or less. The porosity of the substrate layer may be 40% or more and 90% or less (e.g., 50% or more and 80% or less). The porosity of the substrate layer can be measured using the following method. First, 4-cm square samples are obtained at four positions in a widthwise central part of the separator. Next, the adhesive layer is peeled off from each sample using adhesive tape to separate only the substrate layer. Then, the mass of each sample of the substrate layer is measured, and the thickness of the substrate layer is measured using the measurement method described above (method for measuring the thickness of the separator). Next, an apparent density of the substrate layer is calculated from the mass, the area, and the thickness of the substrate layer. The porosity of the substrate layer is calculated using the following equation. A true density of the substrate layer is determined based on the material of the substrate layer.

Porosity (%) = 100 × {1- (apparent density of substrate layer)/(true density of substrate layer) }

(Method for Manufacturing Separator)

An example of a method (M) for manufacturing the separator used in this embodiment will be described. However, the separator of the secondary battery (B) may be manufactured using a method other than the manufacturing method (M) described below. The matters described above with respect to the separator can be applied to the manufacturing method (M), and therefore, redundant description will be omitted. Matters described with respect to the manufacturing method (M) may be applied to the separator of the secondary battery (B).

In the manufacturing method (M), the separator is manufactured by forming an adhesive layer on the substrate layer. The adhesive layer may be formed using a known method without any particular limitation. In one example of the formation method, the adhesive layer is formed by applying a coating solution containing components of the adhesive layer onto the substrate layer and then drying the coating solution. The method for applying the coating solution is not limited, and known methods may be used. For example, the coating solution may be applied using a spraying method, a method using a roller or a die (gravure coating, die coating, or the like), or a printing method (screen printing, ink jet printing, or the like).

Examples of a solvent that can be used for the coating solution include acetone, dimethylformamide, dimethylacetamide, N-methyl-2-pyrrolidone, dimethyl sulfoxide, and tripropylene glycol. In order to form a porous adhesive layer, a non-solvent induced phase separation method (NIPS method) may be used. In one example of the method, a coating solution is prepared by dissolving a resin in the above-mentioned solvent (good solvent), and the coating solution is applied to the substrate layer to form a coating film. Next, before the coating film is dried, the coating film is immersed in a poor solvent, and thus the coating film can be made porous. It is possible to use, as the poor solvent, water, methanol, ethanol, isopropyl alcohol, or a mixture thereof. Further, the porosity of the adhesive layer can be changed by mixing acetone, dimethylformamide, dimethylacetamide, N-methyl-2-pyrrolidone, dimethyl sulfoxide, tripropylene glycol, or the like with the above-mentioned poor solvent.

At the negative electrode of the secondary battery (B), lithium metal may be deposited during charging and dissolve in the nonaqueous electrolyte during discharging. That is to say, the secondary battery (B) may be a lithium secondary battery.

As the nonaqueous electrolyte, a nonaqueous electrolyte containing a nonaqueous solvent and a lithium salt can be used. The nonaqueous solvent may contain an ether. The content of the ether in the nonaqueous solvent may be 80% by mass or more, or 90% by mass or more. The nonaqueous solvent may be constituted by only the ether. The cycle characteristics can be further improved by using a nonaqueous solvent containing an ether. In particular, when the secondary battery (B) is a lithium secondary battery, dendritic deposition of lithium metal on the negative electrode during charging can be suppressed.

The following ether may be used in the nonaqueous solvent. The ether may be a fluoroether containing a fluoro group (-F) or a hydrofluoroether. A hydrofluoroether contains carbon atoms to which hydrogen atoms and fluorine atoms are bound. The use of a hydrofluoroether improves reduction resistance of the nonaqueous electrolyte and suppresses decomposition of the nonaqueous electrolyte on the surface of the negative electrode. The hydrofluoroether content in the nonaqueous solvent may be 80% by mass or more, or 90% by mass or more. The nonaqueous solvent may be constituted by only a hydrofluoroether.

The fluorination percentage of the hydrofluoroether is preferably 60% or more, and more preferably 65% or more. The fluorination percentage may be 95% or less, 90% or less, or 80% or less. The fluorination percentage of a hydrofluoroether is defined by the following formula.

Fluorination percentage (%) = 100 × (number of fluorine atoms included in the hydrofluoroether)/(sum of the number of fluorine atoms and the number of hydrogen atoms included in the hydrofluoroether)

The hydrofluoroether used for the nonaqueous solvent may be at least one selected from the group consisting of 1,1,2,2-tetrafluoroethyl-2,2,2-trifluoroethyl ether and 1,1,2,2-tetrafluoroethyl-2,2,3,3-tetrafluoropropyl ether.

The positive electrode of the secondary battery (B) may include a positive electrode current collector and positive electrode mixture layers formed on both surfaces of the positive electrode current collector. The positive electrode mixture layers may contain polyvinylidene fluoride. Polyvinylidene fluoride functions as a highly stable binder in the nonaqueous electrolyte secondary battery. Accordingly, if the positive electrode mixture layers contain polyvinylidene fluoride, it is possible to enhance the stability of the positive electrode and further improve the cycle characteristics. In the secondary battery (B), the positive electrode mixture layers may contain polyvinylidene fluoride and the adhesive layer of the separator may contain a vinylidene fluoride-based polymer. With this configuration, the adhesion between the positive electrode mixture layers and the adhesive layer can be improved.

(Method for Manufacturing Secondary Battery (B))

There is no limitation on the method for manufacturing the secondary battery (B) as long as the secondary battery (B) can be manufactured. An example of the manufacturing method includes step (i), step (ii), and step (iii). The matters described with respect to the secondary battery (B) can be applied to the following manufacturing method, and therefore, redundant description will be omitted.

Step (i) is a step of bonding the separator to each of the two surfaces of the positive electrode via the adhesive layer to form a laminate of the separators and the positive electrode. The separators may be bonded to the positive electrode by overlaying the separators on the positive electrode and performing hot-pressing. A suitable temperature may be selected as the heating temperature during hot-pressing according to the material of the adhesive layer. For example, if the adhesive layer contains a vinylidene fluoride-based polymer, the heating temperature during hot-pressing may be in the range of 60°C to 120°C.

Step (ii) is a step of forming a wound electrode group by winding the laminate and the negative electrode. The separators are disposed between the positive electrode and the negative electrode. Step (iii) is a step of sealing the electrode group and the nonaqueous electrolyte in an exterior body. There is no limitation on methods for carrying out step (ii) and step (iii), and known methods may be used. The secondary battery (B) is thus manufactured. However, the secondary battery (B) may be manufactured using a manufacturing method other than this manufacturing method.

(Examples of Constituent Elements)

Examples of other constituent elements of the secondary battery (B) will be specifically described below. The constituent elements described below are illustrative, and the constituent elements of the secondary battery (B) of the present embodiment are not limited to the examples described below. Known constituent elements may be used for constituent elements other than those that are characteristic of the present embodiment.

(Negative Electrode of Lithium Secondary Battery)

When the secondary battery (B) is a lithium secondary battery, the negative electrode includes a negative electrode current collector. In the lithium secondary battery, lithium metal is deposited on the negative electrode current collector during charging. The deposited lithium metal dissolves as lithium ions in the nonaqueous electrolyte during discharging.

The negative electrode current collector may be constituted by only a substrate sheet whose main component (content: 50% by mass or more) is not lithium. Alternatively, the negative electrode current collector may include the substrate sheet and lithium-containing metal layers superposed on both surfaces of the substrate sheet. As the substrate sheet, a conductive sheet such as a metal foil can be used. Examples of the material of the metal foil include copper, a copper alloy, stainless steel, and the like. Copper and copper alloys are preferable because they have high conductivity. Stainless steel is preferable because it is difficult to cut.

The lithium-containing metal layers superposed on the substrate sheet are lithium metal layers or lithium alloy layers. The amount of elements other than lithium contained in the lithium alloy layers is very small (10 atomic% or less). Examples of elements other than lithium contained in a lithium alloy include aluminum, magnesium, indium, zinc, etc. By forming the lithium-containing metal layers, it is possible to suppress a decrease in the discharge capacity due to repetition of charging and discharging. Moreover, by forming the lithium-containing metal layers, it is possible to suppress dendritic deposition of lithium metal. There is no particular limitation on the method for forming the lithium-containing metal layers, and the lithium-containing metal layers may be formed using a known method. For example, the lithium-containing metal layers may be formed by pressing lithium metal foils or lithium alloy foils to the substrate sheet. The lithium-containing metal layers are dense, and therefore can be distinguished from lithium metal (which is commonly porous) deposited during charging.

The surface of the negative electrode current collector made of metal may be smooth. If a negative electrode current collector having a smooth surface is used, lithium metal is likely to be deposited uniformly on the negative electrode current collector during charging. The wording "the surface of the negative electrode current collector made of metal is smooth" means that the maximum height roughness Rz of the negative electrode current collector is not more than 20 $\mu$m. The maximum height roughness Rz of the negative electrode current collector made of metal may be not more than 10 $\mu$m. The maximum height roughness Rz is measured in accordance with JIS (Japanese Industrial Standard) B 0601:2013.

The thickness of the substrate sheet may be 3 $\mu$m or more, or 5 $\mu$m or more, and may be 20 $\mu$m or less, or 15 $\mu$m or less. When the negative electrode current collector includes the lithium-containing metal layers, the thickness of the lithium-containing metal layers may be in the range of 5 $\mu$m to 25 $\mu$m.

The negative electrode current collector (e.g., the substrate sheet) may contain austenitic stainless steel. In this case, embrittlement of the negative electrode current collector is suppressed, the negative electrode current collector has appropriate strength and flexibility, and excellent resistance to stress generated in the negative electrode. As a result, breakage of the negative electrode current collector during charging and discharging and accompanying deterioration of the cycle characteristics are suppressed.

It should be noted that the "austenitic stainless steel" is stainless steel having an austenite percentage of 50% or more. The austenite percentage means the proportion (mass percentage) of the austenite phase in the stainless steel. When the contents of the austenite phase, the ferrite phase, and the martensite phase in stainless steel are represented by O, F, and M, respectively, the austenite percentage is calculated using the following formula: $\{O/(O+F+M)\}\times100$. The austenite structure is a face-centered cubic lattice structure (FCC structure), and the ferrite and martensite structures are body-centered cubic lattice structures (BCC structures).

The austenite percentage may be 70% or more, 90% or more, or 100%.

The austenite percentage can be determined using the following method. First, a sample (e.g., size: 25-mm square) of the negative electrode current collector (stainless steel foil) is prepared, the sample is subjected to X-ray diffraction (XRD) measurement using a two-dimensional detection function, and an XRD pattern (vertical axis: X-ray diffraction intensity, horizontal axis: diffraction angle 2θ) is obtained. The size of the measurement region (micro area) is, for example, 15-mm square.

Desirable XRD measurement conditions are given below.

<Analyzer>

Two-dimensional micro-area X-ray diffraction apparatus (RINT-RAPID II, manufactured by Rigaku Corporation)

<Analysis Conditions>

Tube: Co
Monochromatization: Use monochromator (CoKα)
Tube Power: 40 kV - 30 mA
Detector: Imaging plate (two-dimensional)

(Reflection Method)

Collimator: Φ 300 μm
ω angle: 25° to 35° (2°/sec)
Φ angle: 360° rotation (1°/sec)
Measurement time (exposure): 30 min.

Fitting is performed on diffraction peaks observed in the obtained XRD pattern using the least squares method and a standard database, and then quantitative analysis is carried out by performing Rietveld analysis. The XRD pattern may include a diffraction peak corresponding to at least one of the austenite phase, the ferrite phase, and the martensite phase. This analysis can be performed using software included in the analyzer. Through this analysis, the proportion (mass percentage) of the austenite phase to the total of the austenite phase, the ferrite phase, and the martensite phase is obtained as the austenite percentage. Several measurement areas are arbitrarily selected in the sample, the austenite percentage is obtained in each measurement area, and an average value of the austenite percentage is calculated.

The austenitic stainless steel may contain, for example, C, Si, Mn, P, S, Ni, Cr, Mn, Mo, Cu, N, and the like as components other than Fe. This stainless steel may be low carbon stainless steel, ultra-low carbon stainless steel, or nitrogen-containing stainless steel, or may be two-phase stainless steel containing austenite.

Examples of the austenitic stainless steel include SUS301, SUS302, SUS303, SUS304, SUS305, SUS309, SUS310, SUS312, SUS315, SUS316L, SUS317, SUS321, and SUS347. Among these, SUS 304 and SUS 316L are particularly preferable.

The negative electrode current collector may include a resin film and a transition metal layer superposed on the resin film. That is to say, the substrate sheet may include a resin film and a transition metal layer superposed on the resin film. The negative electrode current collector (e.g., the substrate sheet) may be constituted of the resin film and the transition metal layer. The resin film may include a base resin layer and a surface resin layer formed on the base resin layer. The surface resin layer is present at the surface of the resin film. The transition metal layer may be in contact with the resin film (e.g., the surface resin layer). As described above, the negative electrode current collector may include lithium-containing metal layers superposed on the substrate sheet.

The resin film is light in weight, and the energy density of the secondary battery can be easily increased with the use of the resin film. The resin film is unlikely to break during a roll conveyance process and is easy to handle. The resin film is unlikely to become brittle even when the negative electrode potential is low. The resin film is an excellent material for a current collector because it has high resistance to stress generated by expansion or contraction of the electrode and is unlikely to break. In particular, in lithium secondary batteries, the expansion of the negative electrode tends to become large because lithium metal is deposited on the negative electrode during charging. In particular, when lithium metal is deposited like dendrites, the amount of expansion becomes even greater. As a result, stress tends to be generated in the negative electrode.

Main surfaces of the resin film may be smooth, roughened, or subjected to plasma treatment, corona treatment, or the like. When the main surfaces of the resin film are smooth, the maximum height roughness Rz of the main surfaces is 2.5 $\mu$m or less. When the main surfaces of the resin film are roughened, the maximum height roughness Rz of the main surfaces exceeds 2.5 $\mu$m, and may be 8 $\mu$m or more. The maximum height roughness Rz is measured in accordance with JIS B 0601:2013. The main surfaces of the resin film are surfaces other than edge surfaces of the resin film, i.e., two surfaces having the largest area. In the present specification, the term "surface" usually means "main surface".

From the viewpoint of increasing the energy density of the secondary battery, the resin film is desirably thin as far as the mechanical strength is secured. One example of a preferred range of the thickness of the resin film is 1.5 $\mu$m to 30 $\mu$m or less. The thickness of the resin film can be determined by measuring the thickness at arbitrarily selected ten points in a cross section of the resin film using a scanning electron microscope (SEM) and calculating an arithmetic mean of the measured values of the thickness.

The surface resin layer of the resin film may contain a nitrogen-containing resin. The nitrogen-containing resin may constitute 90% by mass or more of the surface resin layer. The nitrogen-containing resin may be a polymer having nitrogen atoms in the main chain and/or a side chain. The nitrogen atom content in the nitrogen-containing resin may be 3% by mass or more. The nitrogen atom content in the surface resin layer may be 2.5% by mass or more.

The nitrogen-containing resin may include nitrogen-hydrogen bonds (bonds between nitrogen atoms and hydrogen atoms). Infrared absorption peaks specific to nitrogen-hydrogen bonds are present in the vicinity of 1655 cm$^{-1}$ (1640 to 1670 cm$^{-1}$) and in the vicinity of 1530 cm$^{-1}$ (1515 to 1545 cm$^{-1}$), for example. The presence or absence of nitrogen-hydrogen bonds can be identified based on these peaks. Specifically, first, an active material of the negative electrode is scraped off or removed in a wet process, and then the transition metal layer is dissolved in an aqueous nitric acid solution to expose the surface resin layer. The presence or absence of nitrogen-hydrogen bonds can then be identified by analyzing the exposed surface resin layer using infrared absorption spectrometry. A specific example of the analysis is shown below. Alternatively, the presence or absence of nitrogen-hydrogen bonds can be identified based on chemical shift of X-ray electron spectroscopy (XPS).

(FTIR-ATR method)

Measuring apparatus: Varian 670FTIR (manufactured by Varian, Inc.)
Measurement mode: attenuated total reflection
Light source: special ceramics
Detector: DLaTGS (deuterated L-alanine-doped triglycine sulfate)
Resolution: 4 cm$^{-1}$
Number of times of integration: 256 times
IRE: Ge
Angle of incidence: 60 degrees
Attachment: one-time reflection ATR attachment (Seagull)

The nitrogen-containing resin may be a polymer having at least one selected from the group consisting of a urea bond, a melamine structure, a triazine ring, an amino group, an amide bond, an aramid bond, an imide bond, a urethane bond, a carbodiimide bond, a uretdione structure, an isocyanurate ring, a nitrile group, and an amide group. Examples of such a polymer include a polyurethane resin, a polyurea resin, a melamine resin, a polyamide resin, an aramid resin, a polyimide resin, etc. Among these, a polyurethane resin is an excellent material for a current collector in that it has high flexibility and high resistance to stress generated by expansion or contraction of the electrode, and is unlikely to break.

A polyurethane resin can be synthesized by reacting a polyol and a polyisocyanate having two or more functional groups (particularly, diisocyanate). By selecting a suitable polyol and a suitable polyisocyanate, it is possible to synthesize a polyurethane resin having various physical properties.

The nitrogen-containing resin may be a polymer having at least one selected from the group consisting of an aliphatic isocyanate group, an aromatic isocyanate group, an allophanate group, and a biuret group. In particular, a thermosetting polyurethane resin is synthesized using a polyisocyanate as a raw material, and therefore, unreacted isocyanate groups are highly likely to remain in the thermosetting polyurethane resin. The isocyanate groups are considered to be reduced at the negative electrode and produce a film component for forming a stable film on the negative electrode. Furthermore, a thermosetting resin forms a solid film having a three-dimensional structure, and therefore has a strong effect of suppressing copper damage. An ultraviolet curable resin also has a similar effect. Since the isocyanate group has an infrared absorption peak due to antisymmetric stretching vibration in the vicinity of 2250 cm$^{-1}$ (2270 to 2240 cm$^{-1}$), the presence or absence thereof can be confirmed based on the infrared absorption peak.

The surface resin layer may contain a filler. By adding a filler (silica, alumina, or the like) to the surface resin layer, irregularities are formed in the surface resin layer. As a result, an anchor effect is generated, and the adhesion between the surface resin layer and the base resin layer can be improved. It is possible to use a filler that can roughen the surface of the surface resin layer and is unlikely to cause deterioration of battery characteristics due to a side reaction with the nonaqueous electrolyte. It is possible to use resin particles, metal oxide particles, ceramic particles, metal particles, or the like as the filler.

The surface resin layer may be a coating layer formed by applying the nitrogen-containing resin to the surface of the base resin layer. In this case, the nitrogen-containing resin may be a thermosetting resin or a UV curable resin. The nitrogen-containing resin may be diluted with a solvent and applied to the surface of the base resin layer. A cured product of a curable resin may have a three-dimensional network of molecular chains.

The thickness of the surface resin layer is, for example, 5 $\mu$m or less, and in a preferred example, in the range of 0.05 $\mu$m to 1.5 $\mu$m. The thickness of the surface resin layer can be determined by measuring the thickness of the surface resin layer at arbitrarily selected ten points in a cross section of a predetermined member (the negative electrode or the negative electrode current collector) using a scanning electron microscope (SEM), and calculating an arithmetic mean of the measured values of the thickness.

Many resin films are not electrically conductive. The transition metal layer serves to impart good conductivity to the negative electrode current collector. The transition metal layer is only required to contain a transition metal and have electron conductivity. It is desirable that the transition metal layer contains a transition metal in a metallic state having electron conductivity due to free electrons.

From the viewpoint of easily securing corrosion resistance and conductivity, the transition metal layer preferably contains copper, nickel, chromium, titanium, iron, silver, gold, tin, or the like. It is desirable that the transition metal layer contains at least one selected from the group consisting of copper, a copper alloy, stainless steel, nickel, and a nickel alloy. It is particularly desirable that the transition metal layer contains copper or a copper alloy, which has excellent conductivity.

Transition metals have a function of making the resin film brittle. In particular, when the transition metal layer contains copper, embrittlement of the resin film is likely to occur. As a new finding that has not yet been reported, it has been found that embrittlement of resin films by transition metals (e.g., copper damage) is remarkably accelerated by lithium metal. That is to say, in the lithium secondary battery in which lithium metal is deposited on the negative electrode, remarkable deterioration of the resin film due to the transition metal layer may occur. However, if a nitrogen-containing resin is contained in at least the surface resin layer of the resin film, embrittlement of the resin film is remarkably suppressed.

It is conceivable to use a nickel-chromium alloy layer as a metal layer that serves as a shield against migration of copper ions to the resin film. However, in the lithium secondary battery, the shielding effect of the nickel-chromium alloy layer cannot be obtained at all. This is presumably because, if metallic lithium, which is easily ionized, is in contact with a transition metal such as copper, the ionization of the transition metal is accelerated and the cleavage of a polymer is accelerated by the transition metal ions. On the other hand, the surface resin layer containing a nitrogen-containing resin has a remarkable effect of suppressing the cleavage of a polymer.

The cleavage of bonds between carbon atoms has the greatest influence on the embrittlement of the resin film. If the resin film contains a nitrogen-containing resin, the nitrogen-containing resin includes bonds between carbon atoms and nitrogen atoms. The bonds between carbon atoms and nitrogen atoms are considered to be unlikely to be affected by transition metals or transition metal ions. There is a possibility that the transition metals are stabilized by nitrogen atoms and the cleavage of the bonds between carbon atoms is suppressed.

The transition metal layer may be formed by depositing the transition metal on the surface of the surface resin layer using a liquid phase method or a vapor phase method. As the liquid phase method, electro deposition such as electrolytic or electroless plating can be used. Examples of the vapor phase method include a vapor deposition method, a sputtering method, an atomic layer deposition method (ALD), and the like. It is also possible to form a base layer through sputtering, and grow the transition metal layer on the base layer through electrolytic plating. That is to say, it is possible to use a plurality of methods in combination. The transition metal layer may be formed using a laminating method. However, the method for forming the transition metal layer is not particularly limited.

The thickness of the transition metal layer is, for example, 5 $\mu$m or less, and may be 3 $\mu$m or less. An example of a preferred range of the thickness of the transition metal layer is 0.05 $\mu$m to 1.5 $\mu$m, and may be 0.1 $\mu$m to 1.5 $\mu$m. For

example, the thickness of the transition metal layer is measured as follows. First, the thickness of the transition metal layer is measured at arbitrarily selected ten points in a cross section of a predetermined member (the negative electrode or the negative electrode current collector) using a scanning electron microscope (SEM). Then, an arithmetic mean of the measured values is calculated to determine the thickness (average thickness) of the transition metal layer. The transition metal layer may be constituted of a plurality of layers of different metals.

The base resin layer is the main part of the negative electrode current collector, usually thicker than the surface resin layer, and thicker than the transition metal layer. A resin or an organic material constitutes 51% by mass or more of the base resin layer. In order to improve adhesion to the transition metal layer or a lithium layer, the base resin layer may contain an inorganic material such as inorganic particles. The base resin layer may be a stretched film, a non-porous film (a film without pores), or a film having a plurality of regularly arranged pores. The base resin layer may have insulating properties, conductive properties, or non-conductive properties. The form and physical properties of the base resin layer are not particularly limited.

The base resin layer is formed by, for example, molding a raw material (general-purpose plastics, general-purpose engineering plastics, etc.) into a sheet shape. Examples of the raw material include a polyester resin, an olefin resin, a polyphenylene sulfide resin, an acrylic resin, a polycarbonate resin, a polyetheretherketone resin, a polysulfone resin, a polyphenylsulfone resin, a polyethersulfone resin, a polyamide resin, a polyimide resin, a polyetherimide resin, a polybenzimidazole resin, a liquid crystal polymer resin, a polyacetal resin, a polyvinyl chloride resin, a polyarylate resin, a silicon resin, a nylon resin, a polyvinylidene chloride resin, an ethylene vinyl alcohol copolymer, a polyvinyl alcohol resin, a polystyrene resin, an epoxy resin, a polyurethane resin, a phenolic resin, a melamine resin, a urea resin, an unsaturated polyester resin, etc. As the resin contained in the base resin layer, a resin may be used alone or two or more resins may be used in combination.

It is desirable that the resin contained in the base resin layer is a resin having an aromatic ring, a resin containing no fluorine atoms, or an olefin resin. If a resin has an aromatic ring (e.g., a benzene ring) in its molecule, the affinity between the base resin layer and the lithium metal layer increases, and the adhesion between them improves.

A preferable polyester resin is an aromatic polyester, and non-stretched polyethylene terephthalate, biaxially stretched polyethylene terephthalate, polybutylene terephthalate, polyethylene naphthalate, and the like are preferable. Polymethyl methacrylate or the like can be used as the acrylic resin. A preferable polyimide resin is an aromatic polyimide. A preferable polyamide resin is an aromatic polyamide (aramid resin). Examples of preferable olefin resins include non-stretched polypropylene, biaxially stretched polypropylene, low-density polyethylene, medium-density polyethylene, high-density polyethylene, linear low-density polyethylene, metallocene polyethylene, an ethylene vinyl acetate copolymer, an ethylene methyl acrylate copolymer, an ethylene ethyl acrylate copolymer, an ethylene methyl methacrylate copolymer, an ethylene acrylic acid copolymer, an ethylene methacrylic acid copolymer, an ionomer, etc.

The base resin layer may be extruded using a T-die method or an inflation method, and may be formed without being stretched or may be formed by being stretched through uniaxial stretching, sequential biaxial stretching, or simultaneous biaxial stretching. The resin may be a homopolymer, a copolymer, or a terpolymer. There is no limitation on the arrangement of constituent units of the resin, and the resin may be a random copolymer or a block copolymer. It is also possible to combine two or more types of base resin layers. For example, two or more base resin layers may be superposed on each other. A crystalline resin may be used in a crystalline state or an amorphous state, or a mixture of a crystalline resin in the crystalline state and the crystalline resin in the amorphous state may be used. A resin in the amorphous state can be formed by quenching or the like. The base resin layer may be an alloy resin constituted of a plurality of resins among the above-mentioned resins.

The surface of the base resin layer may be subjected to corona treatment or plasma treatment to secure adhesion to another layer (e.g., a vapor deposition film). In order to improve adhesion to the surface resin layer by forming irregularities on the base resin layer, irregularities may be formed on the surface of the base resin layer by adding a filler (a ceramic filler, a resin filler, a metal filler, etc.) to the base resin layer.

(Negative Electrode of Lithium-Ion Secondary Battery)

When the secondary battery (B) is a lithium-ion secondary battery, the negative electrode includes a negative electrode current collector and negative electrode mixture layers formed on both surfaces of the negative electrode current collector. As the negative electrode current collector, it is possible to use a conductive sheet (e.g., a metal foil) or a resin film whose examples are described with respect to the substrate sheet of the negative electrode of the lithium secondary battery.

The negative electrode mixture layers contain a negative electrode active material, for example, contain a negative electrode active material and additives (a binder, a conductive material, a thickener, etc.). The negative electrode can be formed using a known method. For example, first, a negative electrode mixture slurry containing the negative electrode active material and additives is prepared. Next, the negative electrode mixture slurry is applied to the negative electrode current collector and then dried to form coating films. Then, the laminate consisting of the negative electrode current collector and the coating films is rolled to obtain the negative electrode. The negative electrode formed is cut into a predetermined size, if necessary. The thickness of the negative electrode mixture layers may be 3 $\mu$m or more, or 5 $\mu$m or more, and may be 200 $\mu$m or less, or 150 $\mu$m or less.

As the negative electrode active material contained in the negative electrode mixture layers, a material capable of reversibly absorbing and releasing lithium ions can be used. Examples of such negative electrode active materials include carbonaceous materials and Si-containing materials. The negative electrode active material may include a Si-containing material, or may be a Si-containing material. Examples of the carbonaceous materials include graphite, easily graphitized carbon (soft carbon), hardly graphitized carbon (hard carbon), and the like. Examples of the Si-containing materials include a Si simple substance, a silicon alloy, a silicon compound (such as a silicon oxide), and a composite material in which a silicon phase is dispersed in a lithium ion conductive phase (matrix). The negative electrode may contain only one negative electrode active material, or two or more negative electrode active materials.

There is no particular limitation on additives contained in the negative electrode mixture layers. It is possible to use substances listed as examples of a binder, a conductive material, and a thickener for positive electrode mixture layers as the binder, the conductive material, and the thickener.

(Positive Electrode)

The positive electrode includes a positive electrode current collector and positive electrode mixture layers disposed on the positive electrode current collector. The positive electrode mixture layers contain a positive electrode active material, for example, contain a positive electrode active material and additives (a conductive material, a binder, a thickener, etc.). The positive electrode mixture layers are formed on both surfaces of the positive electrode current collector. The positive electrode can be formed using a known method. For example, first, a positive electrode mixture slurry containing the positive electrode active material and additives is prepared. Next, the positive electrode mixture slurry is applied to the positive electrode current collector and then dried to form coating films. Then, the laminate consisting of the positive electrode current collector and the coating films is rolled to obtain the positive electrode. The positive electrode formed is cut into a predetermined size, if necessary.

The thickness of the positive electrode mixture layers may be 50 $\mu$m or more, or 100 $\mu$m or more, and may be 300 $\mu$m or less, or 250 $\mu$m or less.

As the positive electrode active material, a material capable of reversibly absorbing and releasing lithium ions can be used. Examples of the positive electrode active material include lithium-containing transition metal oxides, transition metal fluorides, polyanions, fluorinated polyanions, transition metal sulfides, etc. Lithium-containing transition metal oxides are preferable because of their low manufacturing costs and high average discharge voltages.

Examples of transition metal elements contained in a lithium-containing transition metal oxide include Sc, Ti, V, Cr, Mn, Fe, Co, Ni, Cu, Y, Zr, W, etc. The lithium-containing transition metal oxide may contain only one transition metal element or two or more transition metal elements. The lithium-containing transition metal oxide may contain at least one transition metal element selected from the group consisting of Co, Ni, and Mn. The lithium-containing transition metal oxide may contain one or more typical elements. Examples of typical elements include Mg, Al, Ca, Zn, Ga, Ge, Sn, Sb, Pb, Bi, B, etc.

A carbon material or the like can be used as the conductive material. Examples of carbon materials include carbon black (acetylene black, Ketchen black, etc.), carbon nanotubes, graphite, and the like.

Examples of the binder include a fluororesin, polyacrylonitrile, a polyimide resin, an acrylic resin, a polyolefin resin, a rubber-like polymer, and the like. Examples of the fluororesin include polytetrafluoroethylene, polyvinylidene fluoride, and the like.

A cellulose derivative or the like can be used as the thickener. Examples of the cellulose derivative include carboxymethyl cellulose (CMC), modified products thereof, methyl cellulose, and the like. Examples of modified products of CMC include salts of CMC. Examples of the salts include an alkali metal salt (e.g., a sodium salt), an ammonium salt, etc.

A conductive sheet can be used as the positive electrode current collector. A metal foil or the like is used as the conductive sheet. A carbon material may be applied to the surface of the positive electrode current collector.

Examples of the material of the positive electrode current collector (conductive sheet) include a metal material containing Al, Ti, Fe, or the like. The metal material may be Al, an Al alloy, Ti, a Ti alloy, a Fe alloy (e.g., stainless steel), or the like. The thickness of the positive electrode current collector is not particularly limited, and may be in the range of 5 to 300 $\mu$m.

(Separator)

One separator is disposed between the positive electrode and the negative electrode. The separator described above can be used as the separator.

When the secondary battery (B) is a lithium secondary battery, the secondary battery (B) may include a spacer between the negative electrode and the separator, but does not necessarily have to include the spacer. The spacer may be formed on the negative electrode side main surface of the separator or may be formed on the negative electrode. Typically, the nonaqueous electrolyte secondary battery (B) does not include a spacer (a spacer that is not a separator) between the positive electrode and the negative electrode.

The spacer may include a line-shaped part and/or a dot-shaped part. The line-shaped part may be a mesh part having a mesh-like (e.g., a honeycomb) pattern. Alternatively, the spacer may include a plurality of line-shaped parts arranged in stripes.

(Nonaqueous Electrolyte)

A nonaqueous electrolyte having lithium ion conductivity can be used as the nonaqueous electrolyte. The nonaqueous electrolyte may be a liquid or a gel. A liquid nonaqueous electrolyte can be prepared by dissolving a lithium salt in a nonaqueous solvent. Lithium ions and anions are produced by dissolution of the lithium salt in the nonaqueous solvent.

A gel nonaqueous electrolyte may contain a lithium salt and a matrix polymer, or may contain a lithium salt, a nonaqueous solvent, and a matrix polymer. As the matrix polymer, for example, a polymer material that becomes a gel by absorbing a nonaqueous solvent is used. Examples of the polymer material include a fluororesin, an acrylic resin, a polyether resin, and the like.

Known solvents can be used as the nonaqueous solvent. It is possible to use, as the nonaqueous solvent, cyclic carbonic acid esters, chain carbonic acid esters, cyclic carboxylic acid esters, chain carboxylic acid esters, chain ethers, fluorinated chain ethers, cyclic ethers, fluorinated cyclic ethers, etc. Examples of cyclic carbonic acid esters include propylene carbonate (PC), ethylene carbonate (EC), fluoroethylene carbonate (FEC), vinylene carbonate (VC), and the like. Examples of chain carbonic acid esters include diethyl carbonate (DEC), ethyl methyl carbonate (EMC), dimethyl carbonate (DMC), and the like. Examples of cyclic carboxylic acid esters include $\gamma$-butyrolactone (GBL), $\gamma$-valerolactone (GVL), and the like. Examples of chain carboxylic acid esters include ethyl acetate, methyl propionate, methyl fluoropropionate, and the like. Examples of cyclic ethers include 1,3-dioxolane, 4-methyl-1,3-dioxolane, tetrahydrofuran, 2-methyltetrahydrofuran, and the like. Examples of chain ethers include 1,2-dimethoxyethane, diethyl ether, ethyl vinyl ether, methyl phenyl ether, benzyl ethyl ether, diphenyl ether, dibenzyl ether, 1,2-diethoxyethane, diethylene glycol dimethyl ether, etc. It is possible to use a nonaqueous solvent alone or a combination of two or more nonaqueous solvents.

Examples of the lithium salt include lithium salts of chlorine-containing acids ($LiClO_4$, $LiAlCl_4$, $LiB_{10}Cl_{10}$, etc.), lithium salts of fluorine-containing acids ($LiPF_6$, $LiPF_2O_2$, $LiBF_4$, $LiSbF_6$, $LiAsF_6$, $LiCF_3SO_3$, $LiCF_3CO_2$, etc.), lithium salts of fluorine-containing acid imides ($LiN(FSO_2)_2$, $LiN(CF_3SO_2)_2$, $LiN(CF_3SO_2)(FSO_2)$, $LiN(CF_3SO_2)(C_4F_9SO_2)$, $LiN(C_2F_5SO_2)_2$, etc.), lithium halides (LiCl, LiBr, LiI, etc.), and lithium salts containing an oxalate complex ($LiB(C_2O_4)_2$, $LiBF_2(C_2O_4)$, $LiPF_4(C_2O_4)$, $LiPF_2(C_2O_4)_2$, etc.). It is possible to use a lithium salt alone or a combination of two or more lithium salts.

The concentration of the lithium salt in the nonaqueous electrolyte may be 0.5 mol/L or more, 1.0 mol/L or more, or 1.5 mol/L or more, and may be 3.5 mol/L or less, 2.0 mol/L or less, or 1.5 mol/L or less. If the concentration of the lithium salt is in the above range, it is possible to obtain a nonaqueous electrolyte having excellent ion conductivity and appropriate viscosity.

The nonaqueous electrolyte may contain additives (e.g., known additives). Examples of additives include 1,3-propane sultone, methylbenzenesulfonate, cyclohexylbenzene, biphenyl, diphenylether, fluorobenzene, and the like.

(Exterior Body)

The exterior body accommodates the nonaqueous electrolyte and the electrode group. There is no particular limitation on the exterior body, and a known exterior body can be used. The exterior body may include a cylindrical battery case having a bottom, and a sealing body and a gasket that seal an opening of the battery case.

An example of the secondary battery (B) of the present embodiment will be described in detail below with reference to the drawings. The constituent elements described above can be applied to constituent elements of the example of the nonaqueous electrolyte secondary battery described below. Also, the constituent elements in the example described below can be changed based on the above description. Matters described below may also be applied to the above embodiment. Constituent elements that are not essential for the secondary battery (B) according to the present disclosure may also be omitted in the nonaqueous electrolyte secondary battery described below.

(Embodiment 1)

FIG. 2 is a longitudinal cross-sectional view schematically showing an example of a nonaqueous electrolyte secondary battery according to Embodiment 1. A cylindrical nonaqueous electrolyte secondary battery 10 shown in FIG. 2 includes a cylindrical battery case, and an electrode group 14 and a nonaqueous electrolyte (not shown) accommodated in the battery case. The electrode group 14 includes a positive electrode 11, a negative electrode 12, and a separator 13.

The battery case includes a case body 15, which is a cylindrical metal container having a bottom, and a sealing body 16 for sealing an opening of the case body 15. A gasket 27 is disposed between the case body 15 and the sealing body 16. The gasket 27 ensures hermeticity of the battery case. In the case body 15, insulating plates 17 and 18 are disposed at both ends of the electrode group 14 in a winding axis direction. The case body 15 includes a step portion 21.

The sealing body 16 includes a filter 22, a lower valve body 23, an insulating member 24, an upper valve body 25, and a cap 26. The lower valve body 23 and the upper valve body 25 are connected to each other at their respective central portions. The insulating member 24 is disposed between a peripheral portion of the lower valve body 23 and a peripheral portion of the upper valve body 25. The filter 22 and the lower valve body 23 are connected to each other at their peripheral portions. The upper valve body 25 and the cap 26 are connected to each other at their peripheral portions. Among the members constituting the sealing body 16, the members except for the insulating member 24 are electrically connected to each other.

An air vent hole is formed in the lower valve body 23. Therefore, when an internal pressure in the battery case increases due to abnormal heat generation or the like, the upper valve body 25 bulges toward the cap 26 and separates from the lower valve body 23. As a result, the electric connection between the lower valve body 23 and the upper valve body 25 is cut off. When the internal pressure rises further, the upper valve body 25 breaks and gas is discharged through an opening formed in the cap 26.

The positive electrode 11 is electrically connected via a positive electrode lead 19 to the cap 26, which functions as a positive electrode terminal. The negative electrode 12 is electrically connected via a negative electrode lead 20 to the case body 15, which functions as a negative electrode terminal.

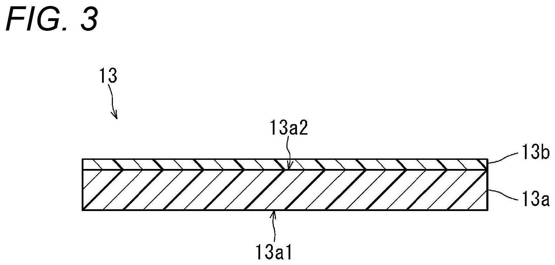

FIG. 3 schematically shows a cross-sectional view of an example of the separator 13. The separator 13 includes a substrate layer 13a and an adhesive layer 13b formed on the substrate layer 13a. The substrate layer 13a has a first main surface 13a1 and a second main surface 13a2. The first main surface 13a1 is disposed on the negative electrode 12 side, and the second main surface 13a2 is disposed on the positive electrode 11 side. That is to say, the first main surface 13a1 faces the negative electrode 12, and the second main surface 13a2 faces the positive electrode 11. The adhesive layer 13b is formed on the second main surface 13a2. As described above, in the electrode group 14, at least a part of the adhesive layer 13b is bonded to the positive electrode 11.

(Supplementary Note)

The following technologies are disclosed by the above description.

(Technology 1)

A nonaqueous electrolyte secondary battery including:

an electrode group in which a positive electrode, a negative electrode, and a separator are wound such that the separator is disposed between the positive electrode and the negative electrode; and
a nonaqueous electrolyte,
wherein the separator includes a substrate layer having a first main surface on the negative electrode side and a second main surface on the positive electrode side, and an adhesive layer formed on the second main surface of the substrate layer,
at least a part of the adhesive layer is bonded to the positive electrode, and
an average value Tn ($\mu$m) of an increase in thickness of one side of the negative electrode due to charging to a state of charge of 90% and an average thickness Ts ($\mu$m) of the separator satisfy a relationship 1.2<Ts/Tn.

(Technology 2)

The nonaqueous electrolyte secondary battery according to technology 1,
wherein the adhesive layer contains a vinylidene fluoride-based polymer synthesized by polymerizing monomers including vinylidene fluoride.

(Technology 3)

The nonaqueous electrolyte secondary battery according to technology 1 or 2,
wherein the adhesive layer contains a copolymer synthesized by polymerizing monomers including vinylidene fluoride and hexafluoropropylene.

(Technology 4)

The nonaqueous electrolyte secondary battery according to any one of technologies 1 to 3, wherein the adhesive layer contains inorganic particles.

(Technology 5)

The nonaqueous electrolyte secondary battery according to any one of technologies 1 to 4, wherein the adhesive layer is porous.

(Technology 6)

The nonaqueous electrolyte secondary battery according to any one of technologies 1 to 5, wherein lithium metal is deposited on the negative electrode during charging and dissolves in the nonaqueous electrolyte during discharging.

(Technology 7)

The nonaqueous electrolyte secondary battery according to any one of technologies 1 to 6,

wherein the nonaqueous electrolyte contains a nonaqueous solvent and a lithium salt,
the nonaqueous solvent contains an ether, and
the ether is contained in the nonaqueous solvent in an amount of 80% by mass or more.

(Technology 8)

The nonaqueous electrolyte secondary battery according to any one of technologies 1 to 7,

wherein the positive electrode includes a positive electrode current collector and positive electrode mixture layers formed on both surfaces of the positive electrode current collector, and
the positive electrode mixture layers contain polyvinylidene fluoride.

(Technology 9)

The nonaqueous electrolyte secondary battery according to any one of technologies 1 to 8, wherein the substrate layer has a porosity of 40% or more and 90% or less.

(Technology 10)

The nonaqueous electrolyte secondary battery according to any one of technologies 1 to 9,

wherein the negative electrode includes a negative electrode current collector, and
the negative electrode current collector contains austenitic stainless steel.

(Technology 11)

The nonaqueous electrolyte secondary battery according to any one of technologies 1 to 9,

wherein the negative electrode includes a negative electrode current collector,
the negative electrode current collector includes a resin film and a transition metal layer superposed on the resin film,
the resin film includes a base resin layer and a surface resin layer formed on the base resin layer, and
the surface resin layer contains a nitrogen-containing resin.

(Technology 12)

The nonaqueous electrolyte secondary battery according to technology 11, wherein the nitrogen-containing resin contains a nitrogen-hydrogen bond.

(Technology 13)

The nonaqueous electrolyte secondary battery according to technology 11 or 12, wherein the nitrogen-containing resin is a polymer having at least one selected from the group consisting of a urea bond, a melamine structure, a triazine ring, an amino group, an amide bond, an aramid bond, an imide bond, a urethane bond, a carbodiimide bond, a uretdione structure, an isocyanurate ring, a nitrile group, and an amide group.

(Technology 14)

The nonaqueous electrolyte secondary battery according to any one of technologies 11 to 13, wherein the nitrogen-containing resin is a polymer having at least one selected from the group consisting of an aliphatic isocyanate group, an aromatic isocyanate group, an allophanate group, and a biuret group.

Examples

Hereinafter, the nonaqueous electrolyte secondary battery according to the present disclosure will be described specifically with reference to examples. However, the present disclosure is not limited to the following examples. In these examples, a plurality of nonaqueous electrolyte secondary batteries having different configurations were manufactured and evaluated.

(Battery A1)

A battery A1 was manufactured in the following procedure.

(1) Manufacture of Positive Electrode

A positive electrode mixture slurry was prepared by mixing a lithium-containing transition metal oxide (positive electrode active material), acetylene black (AB, conductive material), and polyvinylidene fluoride (PVDF, binder) at the following mass ratio: positive electrode active material:AB:PVDF=95:2.5:2.5, adding an appropriate amount of N-methyl-2-pyrrolidone (NMP), and stirring the mixture. The lithium-containing transition metal oxide used as the positive electrode active material contained Li, Ni, Co, and Al.

Next, the positive electrode mixture slurry was applied to both surfaces of a positive electrode current collector (aluminum foil) and then dried, and coating films of the positive electrode mixture were rolled with a roller. Finally, the resulting laminate of the positive electrode current collector and the positive electrode mixture was cut into a predetermined electrode size. Thus, a positive electrode including the positive electrode current collector and positive electrode mixture layers formed on both surfaces of the positive electrode current collector was manufactured. Then, an aluminum tab was attached to the manufactured positive electrode.

(2) Manufacture of Negative Electrode

A Si-containing material and graphite were mixed at the following mass ratio: Si-containing material:graphite=5:95, and the mixture was used as a negative electrode active material. SiC was used as the Si-containing material. A negative electrode mixture slurry was prepared by mixing the negative electrode active material, sodium carboxymethyl cellulose (CMC-Na), styrene-butadiene rubber (SBR), and water. Next, the negative electrode mixture slurry was applied to the surface of a copper foil (negative electrode current collector, thickness: 10 $\mu$m) to form a laminate including the copper foil and coating films formed on the copper foil. After the coating films were dried, the laminate was rolled. Thus, a negative electrode including the copper foil and negative electrode mixture layers formed on both surfaces of the copper foil was formed. The thickness of each of the two negative electrode mixture layers was about 75 $\mu$m.

(3) Preparation of Nonaqueous Electrolyte

A nonaqueous electrolyte was prepared by dissolving $LiPF_6$ and $LiBF_2(C_2O_4)$ in a nonaqueous solvent such that the concentration of $LiPF_6$ was 1 mol/L and the concentration of $LiBF_2(C_2O_4)$ was 0.1 mol/L. Dimethyl carbonate (carbonic acid esterbased nonaqueous solvent) was used as the nonaqueous solvent.

(4) Preparation of Separator

A separator composed of a substrate layer and an adhesive layer formed only on one surface (second main surface) of the substrate layer was prepared as a separator. A microporous polyethylene film was used as the substrate layer. The adhesive layer (thickness: about 1 μm) used was made of polyvinylidene fluoride (PVDF). An average thickness Ts of the separator was measured using the method described above.

(5) Manufacture of Battery

The separator was overlaid on each of the two surfaces of the positive electrode such that the adhesive layer came into contact with the positive electrode, and hot roll pressing was performed to bond the adhesive layer to the positive electrode. Thus, a laminate in which the separators were superposed on both surfaces of the positive electrode was formed.
Next, the laminate (the positive electrode and the separators) and the negative electrode were wound in an inert gas atmosphere to manufacture a wound electrode group. Next, after accommodating the electrode group and the nonaqueous electrolyte in an exterior body, the exterior body was sealed, and thus a battery A1 (nonaqueous electrolyte secondary battery) was manufactured. A bag-shaped exterior body formed from a laminate sheet including an aluminum layer was used as the exterior body.

(Measurement of Average Value Tn)

As for the battery A1, an average value Tn (μm) of an increase in thickness of one side of the negative electrode due to charging to the state of charge of 90% was measured using the method described above

(Charge-Discharge Cycle Test)

The battery A1 was subjected to a charge-discharge cycle test in an environment at 25°C. Charging and discharging were performed under the following conditions. A 20-minute pause was taken between charging and discharging. Charging and discharging were repeated 100 cycles, and a discharge capacity at the 100-th cycle was measured.

(Charging)

Constant current charging was performed at 10 mA/cm$^2$ until the voltage reached 4.1 V, and then constant voltage charging was performed at 4.1 V until the current reached 1 mA/cm$^2$.

(Discharging)

Constant current discharging was performed at 10 mA/cm$^2$ until the voltage reached 3 V.

(Batteries A2 to A11 and Batteries C1 to C3)

Batteries A2 to A11 and batteries C1 to C3 were manufactured using the same method and conditions as those used in the manufacture of the battery A1, except that the average value Tn (μm), the negative electrode active material, the separator, the nonaqueous solvent of the nonaqueous electrolyte, and the substrate of the negative electrode current collector were changed as shown in Table 1. As described above, the average value Tn (μm) is an average value of an increase in thickness of one side of the negative electrode when the batteries were charged 90%. The thickness of each adhesive layer included in each separator was the same as the thickness of the adhesive layer included in the separator of the battery A1. The average value Tn was changed by adjusting the thickness of the positive electrode mixture layers. In the batteries A2 to A11 and C1, an adhesive layer (VDF-HFP copolymer) was formed on the positive electrode side of the substrate layer of the separator, and the adhesive layer was bonded to the positive electrode. No adhesive layer was formed on the negative electrode side main surface of the substrate layer of the separator. In the batteries C2 and C3, the separator did not include an adhesive layer and was constituted by only the substrate layer. In Table 1, P(VDF-HFP) represents a copolymer of vinylidene fluoride (VDF) and hexafluoropropylene (HFP). Inorganic particles (Al$_2$O$_3$ particles) were added to the adhesive layers of the batteries A7, A9, and A11.
The same negative electrode active material as that used in the battery A1 was used in the batteries A2 and C1. The batteries A3 to A11 and the batteries C2 and C3 were lithium secondary batteries in which lithium metal was used as the negative electrode active material. The negative electrodes of these batteries were manufactured using the following method.

(2') Manufacture of Negative Electrode Current Collector (Negative Electrode) for Lithium Secondary Battery

A negative electrode current collector including a copper foil and lithium-containing metal layers was prepared by pressing lithium alloy foils (thickness: 25 $\mu$m) on both surfaces of the copper foil (thickness: 10 $\mu$m), respectively. Next, a nickel tab was attached to the negative electrode current collector. Thus, a negative electrode for a lithium secondary battery was manufactured.

The negative electrode current collector of the battery A10 had the same configuration as the negative electrode current collector of the battery A3, except that an austenitic stainless steel foil (SUS foil) was used instead of the copper foil. The negative electrode current collector of the battery A11 had the same configuration as the negative electrode current collector of the battery A3, except that a predetermined laminate (a laminate including a resin film and a transition metal layer superposed on the resin film) was used instead of the copper foil. The resin film used was a polyethylene terephthalate film (PET film) coated with a polyurethane resin (nitrogen-containing resin). The transition metal layer used was a copper layer. Specifically, copper was first caused to adhere to the resin film through sputtering, and then copper was deposited through wet plating. The negative electrode current collector of the battery A10 and the negative electrode current collector of the battery A11 each had lithium-containing metal layers, like the negative electrode current collector of the battery A3.

The nonaqueous solvents shown in Table 1 are the nonaqueous solvents used for the nonaqueous electrolyte. In Table 1, "carbonic acid ester" indicates that dimethyl carbonate was used, and "ether" indicates that 1,2-dimethoxyethane was used. Each of the manufactured batteries was evaluated in the same manner as the battery A1. Also, as for each of the separators used in the manufacture of the batteries, the average thickness Ts of the separator was measured.

Some of the manufacturing conditions and evaluation results are shown for each battery in Table 1. In Table 1, the discharge capacity at the 100-th cycle of each battery is shown as a relative value when the discharge capacity at the 100-th cycle of the battery A1 is taken to be 100.

[Table 1]

| Battery | Average thickness Ts ($\mu$m) | Average value Tn ($\mu$m) | Ts/Tn | Negative electrode active material | Presence or absence of adhesive layer on second main surface (positive electrode side) | Material of adhesive layer | | Material of substrate of negative electrode current collector | Nonaqueous solvent | Discharge capacity at 100-th cycle (relative value) |
|---|---|---|---|---|---|---|---|---|---|---|
| | | | | | | Resin | Inorganic particles | | | |
| A1 | 18.2 | 14 | 1.30 | SiC+graphite | Present | PVDF | None | Copper foil | Carbonic acid ester | 100 |
| A2 | 25.5 | 17 | 1.50 | SiC+graphite | Present | P(VDF-HFP) | None | Copper foil | Carbonic acid ester | 110 |
| A3 | 34 | 20 | 1.70 | Lithium metal | Present | P(VDF-HFP) | None | Copper foil | Carbonic acid ester | 115 |
| A4 | 34 | 20 | 1.70 | Lithium metal | Present | P(VDF-HFP) | None | Copper foil | Carbonic acid ester | 121 |
| A5 | 34 | 20 | 1.70 | Lithium metal | Present | P(VDF-HFP) | None | Copper foil | Carbonic acid ester | 120 |
| A6 | 50 | 25 | 2.00 | Lithium metal | Present | P(VDF-HFP) | None | Copper foil | Carbonic acid ester | 120 |
| A7 | 50 | 25 | 2.00 | Lithium metal | Present | P(VDF-HFP) | $Al_2O_3$ | Copper foil | Carbonic acid ester | 124 |
| A8 | 50 | 25 | 2.00 | Lithium metal | Present | P(VDF-HFP) | None | Copper foil | Ether | 130 |
| A9 | 50 | 25 | 2.00 | Lithium metal | Present | P(VDF-HFP) | $Al_2O_3$ | Copper foil | Ether | 131 |
| A10 | 34 | 20 | 1.70 | Lithium metal | Present | P(VDF-HFP) | None | SUS foil | Carbonic acid ester | 126 |
| A11 | 50 | 25 | 2.00 | Lithium metal | Present | P(VDF-HFP) | $Al_2O_3$ | Resin film | Carbonic acid ester | 130 |
| C1 | 15 | 15 | 1.00 | SiC+graphite | Present | P(VDF-HFP) | None | Copper foil | Carbonic acid ester | 75 |
| C2 | 30 | 20 | 1.50 | Lithium metal | Absent | - | - | Copper foil | Carbonic acid ester | 80 |
| C3 | 50 | 25 | 2.00 | Lithium metal | Absent | - | - | Copper foil | Ether | 85 |

The batteries A1 to A11 are secondary batteries (B) according to the present disclosure. The batteries C1 to C3 are comparative examples. As shown in Table 1, the cycle characteristics of the batteries A1 to A11 were better than the cycle characteristics of the batteries C1 to C3. As shown in Table 1, the cycle characteristics were improved in the batteries in which the inorganic particles were contained in the adhesive layer. Also, the cycle characteristics were improved in the batteries in which the ether was contained in the nonaqueous solvent. Further, the cycle characteristics were improved in the batteries in which a stainless steel foil or a resin film was used as the substrate of the negative electrode current collector.

[Industrial Applicability]

The present disclosure is applicable to a nonaqueous electrolyte secondary battery.

Although the present invention has been described with reference to an embodiment preferred at present, such disclosure should not be construed in a restrictive manner. Various changes and modifications will definitely become apparent to one of ordinary skill in the art to which the present invention pertains upon reading the above disclosure. Therefore, the appended claims are to be construed to cover all changes and modifications without departing from the true spirit and scope of the invention.

[Reference Signs List]

10: nonaqueous electrolyte secondary battery, 11: positive electrode, 12: negative electrode, 13: separator, 13a: substrate layer, 13a1: first main surface, 13a2: second main surface, 13b: adhesive layer, 14: electrode group

**Claims**

1. A nonaqueous electrolyte secondary battery comprising:

   an electrode group in which a positive electrode, a negative electrode, and a separator are wound such that the separator is disposed between the positive electrode and the negative electrode; and
   a nonaqueous electrolyte,
   wherein the separator includes a substrate layer having a first main surface on the negative electrode side and a second main surface on the positive electrode side, and an adhesive layer formed on the second main surface of the substrate layer,
   at least a part of the adhesive layer is bonded to the positive electrode, and
   an average value Tn ($\mu$m) of an increase in thickness of one side of the negative electrode due to charging to a state of charge of 90% and an average thickness Ts ($\mu$m) of the separator satisfy a relationship 1.2<Ts/Tn.

2. The nonaqueous electrolyte secondary battery according to claim 1,
   wherein the adhesive layer contains a vinylidene fluoride-based polymer synthesized by polymerizing monomers including vinylidene fluoride.

3. The nonaqueous electrolyte secondary battery according to claim 1,
   wherein the adhesive layer contains a copolymer synthesized by polymerizing monomers including vinylidene fluoride and hexafluoropropylene.

4. The nonaqueous electrolyte secondary battery according to any one of claims 1 to 3,
   wherein the adhesive layer contains inorganic particles.

5. The nonaqueous electrolyte secondary battery according to any one of claims 1 to 3,
   wherein the adhesive layer is porous.

6. The nonaqueous electrolyte secondary battery according to any one of claims 1 to 3,
   wherein lithium metal is deposited on the negative electrode during charging and dissolves in the nonaqueous electrolyte during discharging.

7. The nonaqueous electrolyte secondary battery according to any one of claims 1 to 3,

   wherein the nonaqueous electrolyte contains a nonaqueous solvent and a lithium salt,

the nonaqueous solvent contains an ether, and
the ether is contained in the nonaqueous solvent in an amount of 80% by mass or more.

8. The nonaqueous electrolyte secondary battery according to any one of claims 1 to 3,

wherein the positive electrode includes a positive electrode current collector and positive electrode mixture layers formed on both surfaces of the positive electrode current collector, and
the positive electrode mixture layers contain polyvinylidene fluoride.

9. The nonaqueous electrolyte secondary battery according to any one of claims 1 to 3,
wherein the substrate layer has a porosity of 40% or more and 90% or less.

10. The nonaqueous electrolyte secondary battery according to any one of claims 1 to 3,

wherein the negative electrode includes a negative electrode current collector, and
the negative electrode current collector contains austenitic stainless steel.

11. The nonaqueous electrolyte secondary battery according to any one of claims 1 to 3,

wherein the negative electrode includes a negative electrode current collector,
the negative electrode current collector includes a resin film and a transition metal layer superposed on the resin film,
the resin film includes a base resin layer and a surface resin layer formed on the base resin layer, and
the surface resin layer contains a nitrogen-containing resin.

12. The nonaqueous electrolyte secondary battery according to claim 11,
wherein the nitrogen-containing resin contains a nitrogen-hydrogen bond.

13. The nonaqueous electrolyte secondary battery according to claim 11,
wherein the nitrogen-containing resin is a polymer having at least one selected from the group consisting of a urea bond, a melamine structure, a triazine ring, an amino group, an amide bond, an aramid bond, an imide bond, a urethane bond, a carbodiimide bond, a uretdione structure, an isocyanurate ring, a nitrile group, and an amide group.

14. The nonaqueous electrolyte secondary battery according to claim 11,
wherein the nitrogen-containing resin is a polymer having at least one selected from the group consisting of an aliphatic isocyanate group, an aromatic isocyanate group, an allophanate group, and a biuret group.

*FIG. 1*

*FIG. 2*

## FIG. 3

# EP 4 787 600 A1

<table>
<tr><td colspan="2">INTERNATIONAL SEARCH REPORT</td><td>International application No.<br><br>**PCT/JP2024/034501**</td></tr>
</table>

**A.    CLASSIFICATION OF SUBJECT MATTER**

*H01M 50/489*(2021.01)i; *H01M 4/13*(2010.01)i; *H01M 4/62*(2006.01)i; *H01M 4/66*(2006.01)i; *H01M 10/052*(2010.01)i; *H01M 10/0569*(2010.01)i; *H01M 10/0587*(2010.01)i; *H01M 50/426*(2021.01)i; *H01M 50/443*(2021.01)i; *H01M 50/446*(2021.01)i; *H01M 50/449*(2021.01)i; *H01M 50/46*(2021.01)i; *H01M 50/491*(2021.01)i

FI:   H01M50/489; H01M4/13; H01M4/62 Z; H01M4/66 A; H01M10/052; H01M10/0569; H01M10/0587; H01M50/426; H01M50/443 M; H01M50/446; H01M50/449; H01M50/46; H01M50/491

According to International Patent Classification (IPC) or to both national classification and IPC

**B.    FIELDS SEARCHED**

Minimum documentation searched (classification system followed by classification symbols)

H01M50/489; H01M4/13; H01M4/62; H01M4/66; H01M10/052; H01M10/0569; H01M10/0587; H01M50/426; H01M50/443; H01M50/446; H01M50/449; H01M50/46; H01M50/491

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| A | JP 2016-207393 A (NITTO DENKO CORPORATION) 08 December 2016 (2016-12-08)<br>paragraphs [0025], [0082], [0086]-[0087], [0180], [0202] | 1-14 |
| A | WO 2022/239520 A1 (GS YUASA INTERNATIONAL LTD.) 17 November 2022 (2022-11-17)<br>paragraphs [0032], [0054], [0061] | 1-14 |
| A | JP 2023-512967 A (NINGDE AMPEREX TECHNOLOGY LIMITED) 30 March 2023 (2023-03-30)<br>paragraphs [0039], [0101]-[0104] | 1-14 |
| A | JP 2021-192385 A (TEIJIN LIMITED) 16 December 2021 (2021-12-16)<br>paragraphs [0143], [0148] | 1-14 |

☐ Further documents are listed in the continuation of Box C.      ☑ See patent family annex.

| | |
|---|---|
| *    Special categories of cited documents: | "T"   later document published after the international filing date or priority date and not in conflict with the application but cited to understand the principle or theory underlying the invention |
| "A"   document defining the general state of the art which is not considered to be of particular relevance | |
| "D"   document cited by the applicant in the international application | "X"   document of particular relevance; the claimed invention cannot be considered novel or cannot be considered to involve an inventive step when the document is taken alone |
| "E"   earlier application or patent but published on or after the international filing date | |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| **03 December 2024** | **17 December 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
**Information on patent family members**

International application No.

**PCT/JP2024/034501**

| Patent document cited in search report | | | Publication date (day/month/year) | Patent family member(s) | Publication date (day/month/year) |
|---|---|---|---|---|---|
| JP | 2016-207393 | A | 08 December 2016 | (Family: none) | |
| WO | 2022/239520 | A1 | 17 November 2022 | (Family: none) | |
| JP | 2023-512967 | A | 30 March 2023 | US 2023/0058850 A1 paragraphs [0045], [0117]-[0120] WO 2021/174443 A1 EP 4102609 A1 CN 113614969 A | |
| JP | 2021-192385 | A | 16 December 2021 | US 2022/0200098 A1 paragraphs [0221]-[0222], [0227] WO 2020/246497 A1 EP 3919269 A1 EP 4235891 A2 KR 10-2021-0136100 A CN 113678312 A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019181286 A